# EUROPÄISCHE PATENTSCHRIFT

(11) **EP 0 891 502 B1**
(45) Veröffentlichungstag und Bekanntmachung des Hinweises auf die Patenterteilung: **30.05.2001**
(21) Anmeldenummer: 97914220.5
(22) Anmeldetag: 11.03.1997
(51) Int. Cl.: F16F 15/30, F02B 75/06

(54) **SCHWUNGRAD FÜR HUBKOLBENMOTOR**
FLYWHEEL FOR A PISTON ENGINE
VOLANT D'INERTIE POUR MOTEUR A PISTON ALTERNATIF

(30) Priorität: 13.04.1996 DE 19614679
(43) Veröffentlichungstag der Anmeldung: 20.01.1999
(73) Patentinhaber: Motorenfabrik Hatz GmbH & Co. KG, 94099 Ruhstorf (DE)
(72) Erfinder: KOCHANOWSKI, Hans, Alfred, Dr., D-94099 Ruhstorf (DE); MATHEIS, Herbert, D-94099 Ruhstorf (DE)
(74) Vertreter: Grättinger & Partner (GbR)
(86) Internationale Anmeldenummer: EP9701227
(87) Internationale Veröffentlichungsnummer: WO9739255

(56) Entgegenhaltungen:
- EP-A- 0 140 576
- EP-A- 0 385 752
- EP-A- 0 717 211
- US-A- 5 575 183
- PATENT ABSTRACTS OF JAPAN vol. 005, no. 010 (M-051), 22.Januar 1981 & JP 55 142147 A (KASAHARA HIDEO), 6.November 1980,

## Beschreibung

Die Erfindung betrifft ein Schwungrad für Hubkolbenmotoren, insbesondere Handstart-Dieselmotoren, welches aus mehreren Teilen aufgebaut ist sowie ein Verfahren zu dessen Herstellung.

Derartige Schwungräder bestehen üblicherweise aus Grauguß. Mit dem eigentlichen Schwungradkörper können noch weitere Teile wie ein Gebläsering oder ein Magnetsegmentring oder ein Anlasserkranz verbunden sein.

Bei einem derartigen Schwungrad wird durch die Verbindungsflächen bereits eine gewisse Dämpfung des Körperschalls erzielt. Bekannte Ursache für die Körperschalleinleitung in das Schwungrad ist die mit diesem verbundene Kurbelwelle. Deren Längs-, Torsions- und Biegeschwingungen werden auf das Schwungrad übertragen und von diesem wie von einer großflächigen Schallquelle abgestrahlt. Dem Schwungrad kommt daher ein erheblicher Geräuschanteil am Gesamtmotorgeräusch zu.

Die DE-A-4339421 beschreibt ein Zwei-Massen-Schwungrad mit Primärmasse und Sekundärmasse, die über eine Torsionsdämpfereinrichtung miteinander verbunden sind. Der dort beschriebene Aufbau soll lediglich die Aufgabe lösen, das primärseitige Massenträgheitsmoment zu erhöhen. Eine Schallreduktion wird mit dieser Konstruktion weder angestrebt noch erreicht.

Demgegenüber liegt der vorliegenden Erfindung die Aufgabe zugrunde, das Schwungrad mit einfachen Mitteln so zu gestalten, daß sein Geräuschanteil am Motorgesamtgeräusch erheblich reduziert wird.

Zwar beschreibt die US 1,264,642 ein genietetes Schwungrad aus Gesenkschmiedeteilen, dieses löst aber die erfindungsgemäße Aufgabe nicht, da sich ein derartiges Schwungrad schalltechnisch wie ein homogener Körper verhält.

Diese Aufgabe wird erfindungsgemäß durch die Merkmale der Ansprüche 1 und 9 gelöst. Vorteilhafte Ausführungsformen sind in den Unteransprüchen beschrieben.

Durch die mehrteilige Konstruktion des Schwungrads ist eine deutliche Körperschallreduktion erzielbar, wobei wesentlich ist, daß die Teile unter Vorspannung miteinander verbunden sind. Das Zusammenspannen der Teile kann durch Schrauben, Nieten, Tiefziehen oder durch einige Schweißpunkte erfolgen. Insbesondere im Bereich der Berührflächen der miteinander verspannten Teile kommt es zu der angestrebten dämpfenden Wirkung auf die Körperschallausbreitung.

Eine besonders kostengünstige Möglichkeit, das Schwungrad herzustellen besteht, durch Verformung einer ebenen Platte aus Stahlblech im Tiefziehverfahren, so daß eine flache Schale mit ebenem Boden und gerundetem, flachen Rand entsteht. Im Gegensatz zu einer Ausführung des Schwungrads als Gußkörper kann bei einem derartigen Tiefziehteil auf ein Auswuchten verzichtet werden, wodurch sich eine weitere Kosteneinsparung ergibt.

Erfindungsgemäß ist vorgesehen, daß das zweite Teil ebenfalls ein Tiefziehteil ist, welches durch Tiefziehen zusammen mit dem ersten in einem Arbeitsgang hergestellt ist.

Gemäß einer vorteilhaften Ausführungsform besitzen die beiden Tiefziehteile unterschiedliche Materialstärken; dadurch ergibt sich beim Tiefziehen eine bessere Flächenanpassung.

Das zweite Tiefziehteil kann das erste im wesentlichen ganzflächig abdecken; es kann aber alternativ bloß einen Ringabschnitt des ersten Tiefziehteils abdecken; geeignet ist sowohl ein zentraler Ringabschnitt als auch ein peripherer Ringabschnitt.

Dadurch, daß das zweite Tiefziehteil ganz oder teilweise in einem Wandrücksprung des ersten aufgenommen ist, läßt sich eine mehr oder weniger geschlossene Oberfläche des Schwungrads erzielen, wodurch Luftgeräusche abgebaut werden und wodurch ferner die Fügeflächen vergrößert werden, was wiederum der Körperschallausbreitung entgegenwirkt.

Die durch einzelne Schraub-, Schweiß- oder Nietpunkte miteinander verspannten Teile des Schwungrads können zwei oder mehrere Schichten bilden so daß letzteres in einer Art Sandwichbauweise hergestellt ist. Ein oder mehrere mittlere Schichten können dabei aus leichter verformbarem Stahlblech als die Außenschicht bestehen. Dadurch vereinfacht sich nicht nur das gemeinsame Verformen durch Tiefziehen; auch die Körperschalldämpfung wird dadurch verbessert.

Im folgenden werden mehrere Ausführungsformen der Erfindung anhand der Zeichnung erläutert. Es zeigt
- Fig. 1: einen Axialschnitt durch eine Schwungradhälfte mit einem zweiteiligen Schwungrad aus zwei teilflächig aneinanderliegenden tiefgezogenen Teilen und
- Fig. 2: einen Axialschnitt durch die untere Hälfte eines Schwungrads aus zwei ganzflächig miteinander verspannten tiefgezogenen Teilen.

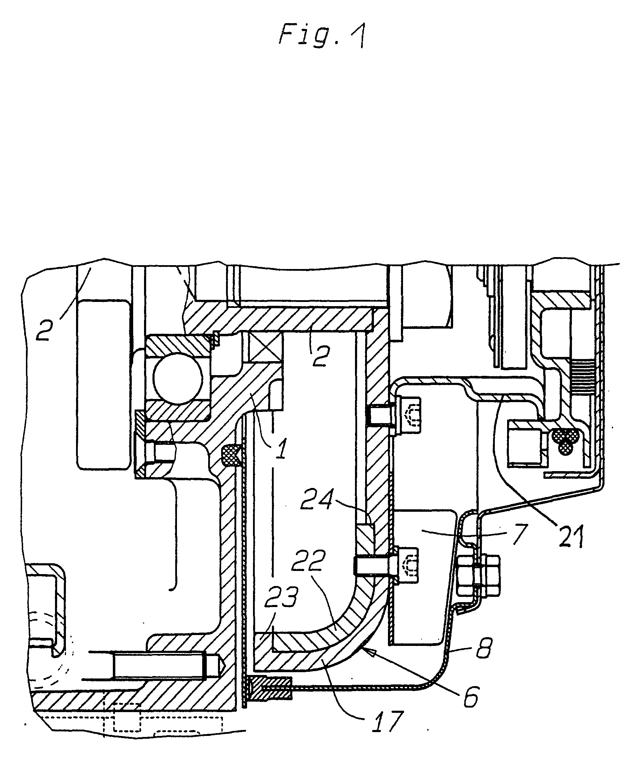

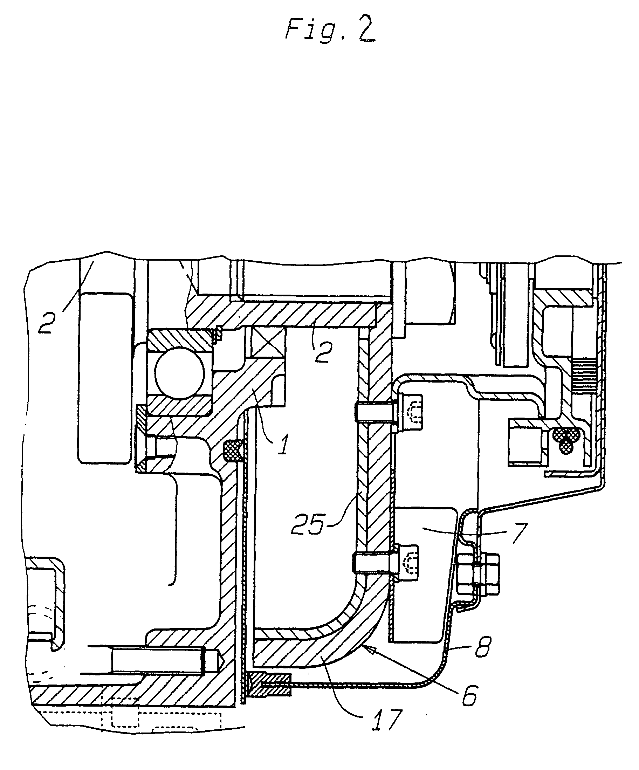

Fig. 1 zeigt ein Reversierstart-Schwungrad 6, das aus einem ersten Teil besteht, welches als Tiefziehteil 17 aus Stahlblech hergestellt ist, und aus einem zweiten Teil, welches mit dem ersten Teil flächig aneinanderliegend durch Schrauben verbunden ist. Beide Schwungradteile sind aus zwei miteinander verspannten Tiefziehteilen 17, 22 ausgebildet. Beide Teile werden zusammen aus entsprechenden Stahlblechplatinen durch einen Tiefziehvorgang gemeinsam geformt und danach z. B. durch Schrauben oder einige Schweißpunkte miteinander verbunden. Damit das innere Tiefziehteil 22, welches das zweite Schwungradteil bildet, mit dem äußeren Tiefziehteil 17 verbunden bleibt, ohne daß es einer besonderen Verbindung zwischen den beiden Tiefziehteilen 17, 22 bedarf, können beide Tiefziehteile, wie in Fig. 2 dargestellt derart ineinandergefügt sein, daß das innere Tiefziehteil 22 hinter einem umgeformten Rand 23 des äußeren Tiefziehteils 17 gefangen ist. Dadurch besteht die Möglichkeit, daß das innere Tiefziehteil 22 zwischen dem Rand 23 und der Schulter 24 eines Rücksprungs des äußeren Tiefziehteils 17 eingespannt aufgenommen ist. Bei dieser Ausführungsform des Reversierstart-Schwungrads 6 ist es vorteilhaft, die Materialdicken der beiden Tiefziehteile 17, 22 unterschiedlich zu wählen. Außerdem kann das Schwungrad in einer nichtgezeigten Variante auch aus mehr als zwei aufeinandergelegten tiefgezogenen Blechen zusammengesetzt sein. Die periphere Anordnung des inneren Tiefziehteils 22 bringt den Vorteil mit sich, daß ein großes Massenträgheitsmoment bei niedrigem Schwungradgewicht erzielbar ist.

Bei der in Fig. 2 gezeigten Gestaltung eines Rerversierstart-Schwungrads 6 wird die Innenseite des ersten Tiefziehteils 17 im wesentlichen durch das zweite Tiefziehteil 25 abgedeckt, d.h. beide Tiefziehteile 17, 25 liegen im wesentlichen ganzflächig aneinander an. Die Dämpfungswirkung ist hier auf die gesamte Schwungradfläche ausgedehnt und somit besonders effizient. Auch hier werden die beiden Tiefziehteile durch gemeinsames Tiefziehen hergestellt. Hier wie bei den oben beschriebenen Ausführungsformen ist wesentlich, daß die zusammengefügten Tiefziehteile 17, 25 miteinander verspannt sind, was durch Nieten, Schrauben, Punktschweißen oder Ineinanderfügen unter Spannung erfolgen kann.

## Patentansprüche

1. Schwungrad für Hubkolbenmotor, insbesondere Handstart-Dieselmotor, welches aus mehreren Teilen aufgebaut ist,
dadurch gekennzeichnet,
daß ein erstes Teil (17) aus Stahlblech, welches mit wenigstens einem zweiten Teil (22, 25) aus Stahlblech zusammen tiefgezogen ist, flächig aneinanderliegend durch Nieten, Schrauben, Punktschweißen und/oder Fügen verbunden ist, derart, daß die zwei oder mehrere Schichten bildenden Teile gegeneinander verspannt sind, um eine Körperschallreduktion des Schwungrades zu bewirken.

2. Schwungrad nach Anspruch 1,
dadurch gekennzeichnet,
daß die beiden Tiefziehteile (17, 25) unterschiedliche Materialstärken aufweisen.

3. Schwungrad nach Anspruch 1,
dadurch gekennzeichnet,
daß die beiden Tiefziehteile (17, 25) im wesentlichen ganzflächig aneinanderliegen.

4. Schwungrad nach Anspruch 1,
dadurch gekennzeichnet,
daß das zweite Tiefziehteil (22) bloß einen Ringabschnitt des ersten Tiefziehteils (17) abdeckt.

5. Schwungrad nach Anspruch 4,
dadurch gekennzeichnet,
daß das zweite Tiefziehteil (22) einen peripheren Ringabschnitt des ersten Tiefziehteils (17) abdeckt, um ein großes Massenträgheitsmoment bei niedrigem Gewicht des Schwungrades (22, 17) zu erzielen.

6. Schwungrad nach Anspruch 4,
dadurch gekennzeichnet,
daß das zweite Tiefziehteil (22) ganz oder teilweise in einem Wandrücksprung des ersten (17) aufgenommen ist.

7. Schwungrad nach Anspruch 1,
dadurch gekennzeichnet,
daß das erste Teil als Tiefziehteil (17) in Form einer flachen Schale mit ebenem Boden und gerundetem flachen Rand ausgebildet ist.

8. Schwungrad nach Anspruch 7,
dadurch gekennzeichnet,
daß das zweite Teil als ebene Scheibe (18) ausgebildet und innerhalb des Bodens auf der Schaleninnenseite befestigt ist.

9. Verfahren zum Herstellen eines mehrteiligen Schwungrades,
dadurch gekennzeichnet,
daß ein erstes aus Stahlblech bestehendes Teil (17) des Schwungrades gemeinsam mit wenigstens einem zweiten ebenfalls aus Stahlblech bestehenden Teil (22; 25) des Schwungrades in einem Bearbeitungsschritt tiefgezogen wird, so daß die Teile flächig aneinander liegen und bei Montage gegeneinander verspannbar sind.

10. Verfahren nach Anspruch 9,
dadurch gekennzeichnet,
daß zwischen dem ersten und zweiten Tiefziehteil eine oder mehrere Schichten aus leicht verformbarem Stahlblech dazwischengelegt werden, um in einem gemeinsamen Tiefziehvorgang ein Schwungrad in Sandwichbauweise zu erhalten.

## Claims

1. A flywheel for a piston engine, in particular for a manually started Diesel engine, assembled from several parts,
characterised by the fact
that a first part (17) from steel plate which is deep-drawn is connected with at least a second part (22, 25) by rivets, bolts, spot welding and/or fusing while resting against each other in such a way that the parts which form two or more layers are braced against each other to reduce the flywheel's body-borne noise.

2. A flywheel according to Claim 1,
characterised by the fact
that the two deep-drawn parts (17, 25) are from material of different thicknesses.

3. A flywheel according to Claim 1,
characterised by the fact that the two deep-drawn parts (17, 25) rest mainly against each other with their full area.

4. A flywheel according to Claim 1,
characterised by the fact
that the second deep-drawn part (22) merely covers an annular section of the first deep-drawn part (17).

5. A flywheel according to Claim 4,
characterised by the fact
that the second deep-drawn part (22) covers a peripheral annular section of the first deep-drawn part (17) in order to achieve a greater mass inertia moment at a low flywheel (22, 17) weight.

6. A flywheel according to Claim 4,
characterised by the fact
that the second deep-drawn part (22) is fully or partly located in a step in the wall of the first one (17).

7. A flywheel according to Claim 1,
characterised by the fact
that the first part as the deep-drawn part (17) is designed in the form of a shallow dish with a flat base and a rounded, flat edge.

8. A flywheel according to Claim 7,
characterised by the fact
that the second part is designed as a flat disc (18) and is fastened within the base on the inside of the dish.

9. A process for making a multi-part flywheel,
characterised by the fact
that a first part (17) of the flywheel made from steel plate is deep-drawn in one operation with at least a second Part (22, 25) also made from steel plate so that the parts rest with their faces against each other and can be braced against each other in assembly.

10. A process according to Claim 9,
characterised by the fact
that one or more layers from easily formable steel plate are placed between the first and the second deep-drawn part in order to obtain a sandwich-type flywheel in a joint deep-drawing operation.

## Revendications

1. Volant pour moteurs à pistons alternatifs, en particulier pour moteurs diesel à lancement manuel, le volant étant composé de plusieurs parties,
caractérisé par le fait
qu'une première partie (17) en tôle d'acier est emboutie conjointement avec au moins une deuxième partie (22, 25) en tôle d'acier et est reliée à cette dernière, avec contact de surface entre les deux parties, par rivetage, vissage, soudure par points et/ou emboîtement, de telle manière que les parties formant deux ou plus de deux couches soient serrées l'une contre l'autre en vue d'une réduction de la propagation du son par conduction par le volant.

2. Volant suivant la revendication 1,
caractérisé par le fait
que les deux parties embouties (17, 25) présentent des épaisseurs de matériau différentes.

3. Volant suivant la revendication 1,
caractérisé par le fait
que les deux parties embouties (17, 25) se trouvent en contact essentiellement par toutes leurs surfaces en regard.

4. Volant suivant la revendication 1,
caractérisé par le fait
que la deuxième partie emboutie (22) ne recouvre qu'une portion annulaire de la première partie emboutie (17).

5. Volant suivant la revendication 4,
caractérisé par le fait
que la deuxième partie emboutie (22) recouvre une portion annulaire périphérique de la première partie emboutie (17), pour procurer au volant (22, 17) une inertie importante sous un faible poids.

6. Volant suivant la revendication 4,
caractérisé par le fait
que la deuxième partie emboutie (22) est entièrement ou partiellement encastrée dans un renfoncement de paroi de la première partie emboutie (17).

7. Volant suivant la revendication 1,
caractérisé par le fait
que la première partie est réalisée en tant que partie emboutie sous la forme d'une cuvette plate à fond plan et à bord annulaire plat arrondi.

8. Volant suivant la revendication 7,
caractérisé par le fait
que la deuxième partie est réalisée sous la forme d'un disque plan (18) et est fixée dans le fond sur le côté intérieur de la cuvette.

9. Procédé pour la fabrication d'un volant en plusieurs parties,
caractérisé par le fait
qu'une première partie (17) en tôle d'acier du volant est emboutie, conjointement avec au moins une deuxième partie (22 ; 25) également en tôle d'acier du volant, en une seule opération, de sorte que les parties se trouvent en contact réciproque de surface et peuvent être serrées l'une contre l'autre lors du montage.

10. Procédé suivant la revendication 9,
caractérisé par le fait
qu'une ou plusieurs couches en tôle d'acier facilement déformable sont intercalées entre la première partie emboutie et la deuxième partie emboutie, pour obtenir en une opération d'emboutissage conjointe un volant en structure sandwich.
